# EUROPÄISCHE PATENTSCHRIFT

(11) **EP 1 572 498 B1**
(45) Veröffentlichungstag und Bekanntmachung des Hinweises auf die Patenterteilung: **19.04.2006**
(21) Anmeldenummer: 03795775.0
(22) Anmeldetag: 19.12.2003
(51) Int. Cl.: B60R 11/02

(54) **KRAFTFAHRZEUG MIT EINER ANLAGE ZUR WIEDERGABE VON SCHALL**
MOTOR VEHICLE WITH A UNIT FOR REPRODUCTION OF SOUND
VEHICULE AUTOMOBILE EQUIPE D'UN SYSTEME DE REPRODUCTION DU SON

(30) Priorität: 20.12.2002 DE 10261104
(43) Veröffentlichungstag der Anmeldung: 14.09.2005
(73) Patentinhaber: Reitter & Schefenacker Sound GmbH, 73730 Esslingen (DE)
(72) Erfinder: SERVE, Gregor, 71522 Backnang (DE); HEIM, Andreas, 73728 Esslingen (DE); JAHN, Silke, 73732 Esslingen (DE)
(74) Vertreter: Schmid, Rudolf
(86) Internationale Anmeldenummer: PCT/DE2003/004215
(87) Internationale Veröffentlichungsnummer: WO 2004/056612

(56) Entgegenhaltungen:
- DE-A- 3 902 437
- DE-A- 4 137 304
- DE-A- 19 909 143
- US-A- 6 076 631
- US-B1- 6 310 958
- PATENT ABSTRACTS OF JAPAN vol. 1998, no. 02, 30. Januar 1998 (1998-01-30) -& JP 09 275595 A (MATSUSHITA ELECTRIC IND CO LTD), 21. Oktober 1997 (1997-10-21)

## Beschreibung

Die Erfindung betrifft ein Kraftfahrzeug mit einer Anlage zur Wiedergabe von Schall, wobei die Anlage zur Schallwiedergabe mindestens eine Bassreflexbox umfasst, die mit einem Bassreflexrohr und/oder einer Bassreflexöffnung und mit wenigstens einem eingebauten Lautsprecher ausgestattet ist.

Ein derartiges kraftfahrzeug ist beispielsweise aus der DE 4137304 A bekannt. Hier ist eine Bassreflexbox im kofferraum angeordnet.

Eine Bassreflexbox, also ein Helmholtzresonator, besteht in der Regel aus einem luftgefüllten Gehäuse, einem eingebauten Lautsprecher und einem Bassreflexrohr oder einer Bassreflexöffnung. Der Lautsprecher stellt das erste schwingungsfähige System dar, während das vom Gehäuse umgebene Luftvolumen das zweite schwingungsfähige System darstellt. Zwischen dem treibenden Lautsprecher und dem angetriebenen Luftvolumen ergibt sich bei entsprechender Auslegung eine Resonanzkopplung, bei der die aus der Bassreflexöffnung austretende Druckwelle zur Verstärkung der direkten Druckwelle eine Phasenverschiebung erfährt. Durch eine geschickte Wahl der Resonanzfrequenz wird eine Verstärkung der Tieftonwiedergabe bei gleichzeitiger Reduzierung der Lautsprechermembranauslenkung erzielt. Für eine optimale Bassreflexbox wird im Kraftfahrzeug ein großvolumiger Hohlraum benötigt, der nicht das Volumen des Fahrgast- und Kofferraumes verkleinert.

Der vorliegenden Erfindung liegt daher die Problemstellung zugrunde im Kraftfahrzeug einen entsprechenden Hohlraum zu finden, in dem eine großvolumige Bassreflexbox untergebracht werden kann. Zugleich soll dieser Hohlraum optimal genutzt werden.

Diese Problemstellung wird mit den Merkmalen des Hauptanspruches gelöst. Dazu wird die Bassresonanzbox in der Reserveradwanne angeordnet. Hierbei füllt die Bassreflexbox mindestens den für ein Reserverad vorgesehenen Platz in der Reserveradwanne bezüglich seiner maximalen Ausdehnung entlang der Reserveradachse und bezüglich der radialen Außenkontur - abzüglich eines radialen und axialen Spieles von 5 bis 20 Millimeter aus.

Die Reserveradwanne ist in der Regel im Kofferraumboden hinter oder über der Hinterachse angeordnet. Der Kofferraumboden ist als meist separates, in eine selbsttragende Karosserie unlösbar integriertes Bauteil aus Stahlblech, Buntmetall, faserverstärktem Kunststoff, einem Verbundwerkstoff oder einer Kombination hiervon gefertigt. Beispielsweise kann die Reserveradwanne auch als separates Kunststoffteil im Kofferraumboden eingeklebt sein. Bei einigen Fahrzeugtypen wird das Reserverad auch in einer hinter einem der Hinterräder gelegenen Seitenwandverkleidung untergebracht. Auch hier liegt das Reserverad in einer Mulde.

Beim Kauf moderner Fahrzeuge hat der Käufer oft die Wahl anstelle eines regulären Reserverades oder eines Notrades einen Reifenreparatursatz zu wählen. Für den Fall, dass der Käufer einen Reparatursatz einem Rad vorzieht, wird der für das Reserverad vorgesehene Raum nicht benötigt. In diesem Raum kann u.a. eine Bassreflexbox und gegebenenfalls der Reifenreparatursatz angeordnet werden.

Weitere Einzelheiten der Erfindung ergeben sich aus den Unteransprüchen und der nachfolgenden Beschreibung eines schematisch dargestellten Ausführungsbeispiels.
- Figur 1:: Draufsicht auf einen Kofferraumboden mit Bassresonanzbox;
- Figur 2:: Querschnitt durch den Kofferraumboden und die Bassresonanzbox;
- Figur 3:: Längsschnitt durch den Kofferraumboden und die Bassresonanzbox.

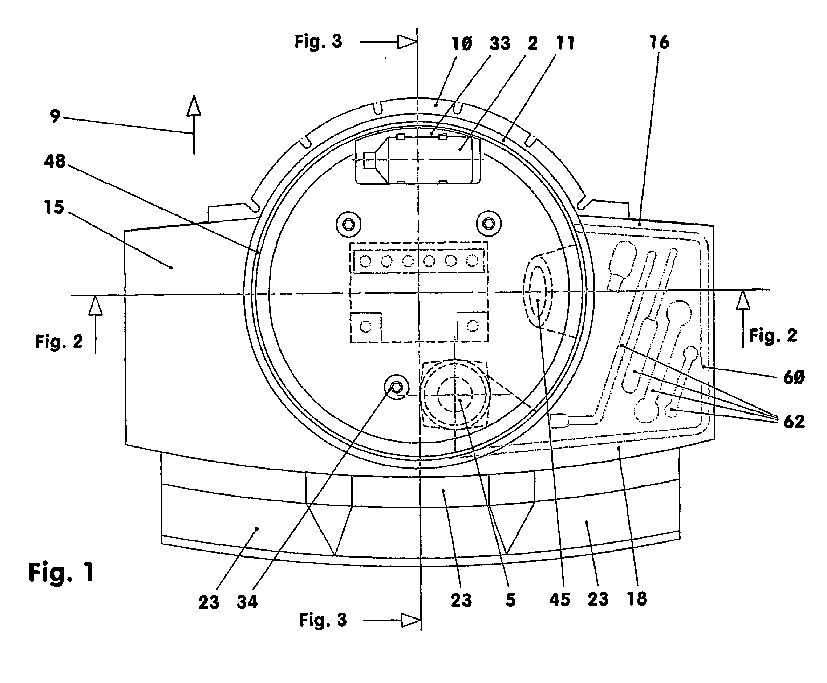

Die Figuren 1 bis 3 zeigen als Kofferraumboden (10) ein z.B. tiefgezogenes metallisches Blechteil, in dem in einer eingearbeiteten Reserveradwanne (11) eine Starterbatterie (1) und eine Bassreflexbox (30) untergebracht sind.

Bei dem in Figur 1 in der Draufsicht dargestellten Kofferraumboden (10) handelt es sich um ein Blechteil, das beispielsweise zwischen den Radhäusern der Hinterräder eines Geländefahrzeugs angeordnet ist. Dieser Geländewagen ist beispielsweise ein Kombi, der keine geschlossene Abschottung zwischen dem Kofferraum und dem Fahrgastraum hat. Der Kofferraumboden (10) hat beidseitig neben der Reserveradwanne (11) jeweils ein annähernd horizontales Seitenblech (15, 16) dessen Niveau z.B. einige Zentimeter höher ist als die für das Reserverad gedachte Auflagefläche (12). In Fahrtrichtung (9) gesehen hat die Reserveradwanne (11) eine z.B. nahezu vertikale vordere Wandung (21), die einen Zylindermantelabschnitt darstellt. Im Bereich der Seitenbleche (15, 16) setzt sich die vertikale Wandung (21) eben fort, wobei diese Fortsetzungsteile annähernd quer zur Fahrtrichtung (9) orientiert sind. Entgegen der Fahrtrichtung (9) hat der Kofferraumboden (10) über die gesamte Breite eine ebenfalls vertikale hintere Wandung (22) in Form eines Zylindermantelabschnitts mit einem mehrere Meter großen Radius. Diese Wandung (22) läuft zur nicht dargestellten Fahrzeugrückwand hin über schräge und horizontale Abschnitte (23) über.

Der Kofferraumboden (10), dessen Oberkanten vorn und hinten beispielsweise auf dem gleichen Niveau liegen, ist mittels einer zwischen den Radhäusern sich erstreckenden Wannenabdeckplatte (7) überdeckt. Die Wannenabdeckplatte (7) ist ein selbsttragendes, formsteifes -Luftschall durchlässiges - Bauteil.

Im Zentrum der Reserveradwanne (11) befindet sich die z.B. rechteckig gestaltete Batteriemulde (13). In ihr ist die Starterbatterie (1) über Spannbänder oder andere Spannelemente crashsicher befestigt. Um die Starterbatterie (1) herum ist die Bassresonanzbox (30) angeordnet. Letztere (30) ist hierbei nur geringfügig kleiner als das alternativ einzubauende Reserverad.

Die Bassreflexbox (30) ist beispielsweise zweischalig - aus einer Unter-(41) und Oberschale (31) - aufgebaut. Beide Schalen (31, 41), sie beinhalten beispielsweise ein Luftvolumen von ca. 30 bis 40 Liter, haben im Ausführungsbeispiel über weite Bereiche ihrer Außenkontur kegelstumpfmantelförmige Außenflächen. Letztere haben ihren maximalen Durchmesser im Bereich der zwischen den Schalen (31) und (41) gelegenen Trennfuge (39). Der dortige Durchmesser ist ca. 5 bis 20 Millimeter kleiner als der Durchmesser eines alternativ einbaubaren Reserverads. Nach oben hin geht die Außenfläche in eine weitgehend ebene Deckelfläche (32) über. Diese Deckelfläche (32) liegt parallel zur Wannenabdeckplatte (7). Sie ist ca. 5 bis 10 Millimeter von dieser (7) entfernt.

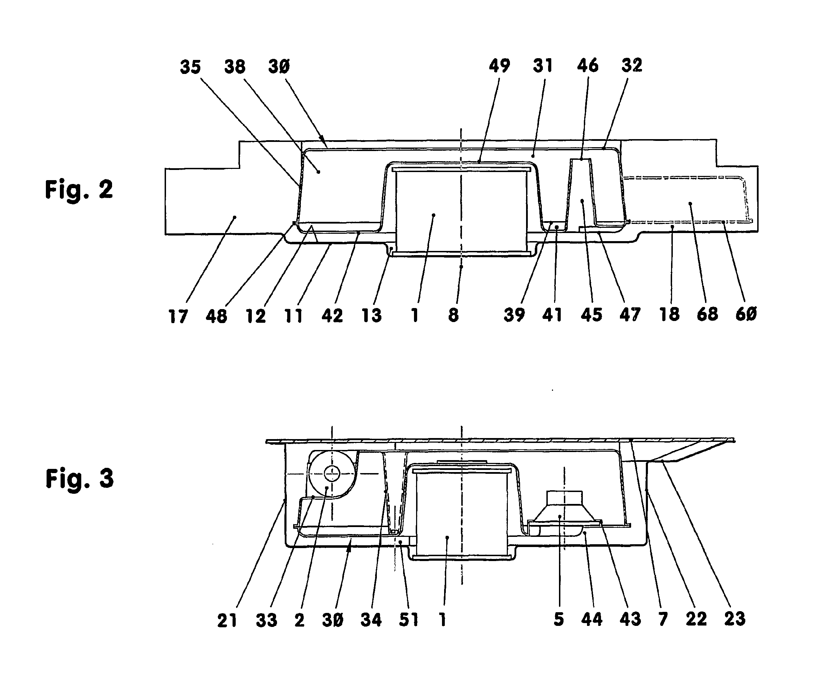

Die Trennfuge (39) liegt unterhalb der mittleren Höhe der Bassreflexbox (30). In der Oberschale (31), die im Wesentlichen die Form eines Topfes hat, befindet sich im Bereich des Überganges zwischen der Mantelfläche (35) und der Deckelfläche (32) eine Einstülpung (33). Die Einstülpung (33) hat nach Figur 3 einen annähernd trapezförmigen Querschnitt. In der Einstülpung (33), die hier nach Figur 1 in Fahrtrichtung (9) vor der Starterbatterie (1) liegt, ist ein Reifenreparatursatz angeordnet. Von dem Reifenreparatursatz, der u.a. z.B. einen Kompressor, eine Flasche mit Dichtmasse, eine Einfüllhilfe und ein Ersatzventil umfasst, ist in den Figuren 1 und 3 nur die Dichtmassenflasche (2) (Tire-Fit-Flasche) dargestellt.

Ferner hat die Oberschale (31) für die Verschraubung mit der Reserveradwanne (11) z.B. drei kegelstumpf- oder zylinderförmige Einstülpungen (34), die sich bis zum Boden (42) oder der Innenfläche der Unterschale (41) erstrecken. Diese Einstülpungen (34) enden in einem kreisringförmigen Grund. Letzterer weist jeweils eine zentrale Bohrung für die Aufnahme einer Schraube zur Befestigung der Bassreflexbox (30) in der Reserveradwanne (11) auf. Die Einstülpungen (34) sitzen nach Figur 1 auf einem Kreis, dessen Zentrum hier auf der Mittellinie (8) der Bassreflexbox (30) liegt.

Die in der Reserveradwanne (11) aufliegende Unterschale (41) hat bei einem weitgehend ebenen Boden (42) einen wesentlich komplizierteren Aufbau. Sie umfasst die Lautsprecheraufnahme (43), das Bassreflexrohr (45) und eine Batteriehaube (49). Ihr äußerer, in einem Klebeflansch endender Rand (48) liegt im Ausführungsbeispiel nur wenige Zentimeter oberhalb der Reserveradauflagefläche (12). Nach oben stehen die Batteriehaube (49) und das Bassreflexrohr (45) über. Beide Teile ragen bis auf wenige Zentimeter an die Innenwandung der Deckelfläche (32) heran.

Die Batteriehaube (49) umgibt die Starterbatterie (1) z.B. in einem Abstand von 5 bis 15 Millimetern. Die Starterbatterie (1) ist dadurch zuggeschützt und thermisch isoliert. Ggf. ist - bei einer im Wesentlichen horizontal liegenden Reserveradwanne (11) - zwischen dem annähernd horizontalen Batteriehaubenabschnitt und der Deckelfläche (32) ein Durchgang angeordnet, durch den entstandene Batteriegase nach oben abziehen können.

Das Bassreflexrohr (45) hat z.B. einen elliptischen Querschnitt, der sich zur innen liegenden Reflexrohreintrittsöffnung (46) hin verjüngt. Im Bereich des Schallaustritts des Bassreflexrohres (45) ist der Boden (42) nach oben hin bereichsweise versetzt. Der Versatz beträgt z.B. 8 bis 12 Millimeter. Durch den Versatz wird ein sich keilförmig verbreiternder Reflexrohrkanal (47) geschaffen, der den Freiraumquerschnitt zwischen dem Kofferraumboden (10) und der Unterseite der Bassreflexbox (30) erheblich vergrößert.

Das Bassreflexrohr (45) befindet sich im Ausführungsbeispiel rechts von der Starterbatterie (1) ca. mittig zwischen der nächstgelegenen seitlichen Wandung der Batteriehaube (49) und der Wandung (35) der Bassreflexbox (30). Die große Halbachse der Reflexrohreintrittsöffnung (46) ist hierbei in Fahrzeuglängsrichtung orientiert.

Der Lautsprecher (5) ist hier hinter der Starterbatterie (1) in der Bassreflexbox (30) angeordnet. Er sitzt geringfügig nach rechts versetzt neben der vertikalen Fahrzeugmittenlängsebene. Auch er ist ca. mittig zwischen den seitlichen Wandungen der Batteriehaube (49) und der Bassreflexbox (30) positioniert. Im Bereich der Befestigung des Lautsprechers (5) ist der Boden z.B. 10 bis 20 Millimeter nach oben versetzt bzw. eingestülpt. Der Versatz erstreckt sich hier bezüglich der Höhe bis zur Trennfuge (39). Zwischen dem beispielsweise parallel zum Boden (42) versetzte Bodenbereich und der Reserveradauflagefläche (12) befindet sich ein im Wesentlichen keilförmiger Hohlraum, dessen vertikaler Querschnitt sich zum Rand (48) der Unterschale (41) hin mit einem Öffnungswinkel von ca. 45 - 120 Winkelgrade verbreitert.

Gegebenenfalls werden in der Bassreflexbox (30) mehrere Lautsprecher angeordnet. Die Lautsprecher können hierbei unterschiedliche Abstrahlrichtungen haben.

Zur Befestigung des Lautsprechers (5) ist am Boden (41) im Bereich des Versatzes eine z.B. kreisrunde Öffnung angeformt, die dem Maximaldurchmesser des Lautsprecherflansches bzw. -chassis entspricht. Die Öffnung endet in einem nach innen orientierten - einen Umgriff bildenden - Befestigungsflansch (43). Am Befestigungsflansch (43) ist der Lautsprecher (5) von außen anliegend z.B. durch Verschrauben befestigt.

An dem hier beschriebenen Platz hat die nach innen in die Bassreflexbox (30) orientierte Abstrahlfläche des Lautsprechers (5) in fast alle Richtungen lange Abstrahlwege, so dass sich das gesamte Luftvolumen des Innenraumes (38) der Bassreflexbox (30) optimal zum Schwingen anregen lässt.

Selbstverständlich kann der Lautsprecher (5) auch an den vertikalen Seitenwandungen (35) oder der Deckelfläche (32) der Bassreflexbox (30) angeordnet werden.

Die zusammengebaute, bis auf die Lautsprecheröffnung und die Bassresonanzrohröffnung gasdicht geschlossene Bassreflexbox (30) wird hier über drei auf der Reserveradauflagefläche (12) im Bereich der Einstülpungen (34) angeordnete Distanzstücke (51) am Kofferraumboden (10) angeschraubt. Die Distanzstücke (51) sind beispielsweise Ringe bzw. Scheiben aus Gummi oder gummiähnlichem Material. Sie gewährleisten einen Minimalabstand zwischen dem Kofferraumboden (10) und der Bassreflexbox (30) von ca. fünf Millimetern.

Sollte im Bereich des Kofferraumbodens (10) unterhalb der zwischen den Fahrzeugseitenwänden und/oder den Radhäusern gelegenen Wannenabdeckplatte (7) neben, vor oder hinter der Reserveradwanne (11) noch mindestens ein Freiraum (17, 18) sein, so kann dieser zur Vergrößerung des Luftvolumens der Bassreflexbox (30) durch mindestens eine Gehäuseerweiterung (60) genutzt werden. In den Figuren 1 und 2 ist eine derartige Gehäuseerweiterung (60) strichpunktiert dargestellt. Im Ausführungsbeispiel befindet sich die Gehäuseerweiterung (60) rechts der Reserveradwanne (11) in der Seitenmulde (18). Diese Gehäuseerweiterung (60) hat auf ihrer Oberseite einige Vertiefungen (62), in denen verschiedene Werkzeuge und andere Hilfsmittel, die z.B. im Reifenpannen- und Abschleppfall benötigt werden, einzeln untergebracht und fixiert sind. Der Innenraum (68) der Gehäuseerweiterung (60) - nach dem Ausführungsbeispiel - erhöht das Luftvolumen der Bassreflexbox (30) z.B. um 2 bis 5 Liter.

Auch in die linke Seitenmulde (17) kann eine Gehäuseerweiterung hineinragen. In dieser könnte dann in einer Ausnehmung oder einer Einstülpung u.a. der Kompressor, ein Wagenheber, die Dichtmassenflasche (2) und/oder ein Erste-Hilfe-Paket angeordnet sein. Generell kann in den Gehäuseerweiterungen oder auch im Bassreflexboxgehäuse ohne Erweiterung eine abnehmbare Anhängerkupplung gelagert und fixiert sein.

Generell können alle an der Außenkontur der Bassreflexbox (30) und der oder den Gehäuseerweiterungen (60) unterzubringenden Werkzeuge oder Reparatursatzteile an beliebigen, geeigneten Stellen in entsprechenden Vertiefungen oder Aussparungen positioniert werden.

Bezugszeichenliste:
- 1: Starterbatterie
- 2: Dichtmassenflasche, Reifenreparatursatz
- 5: Lautsprecher, dynamisch
- 7: Wannenabdeckplatte
- 8: Mittellinie des Reserverads und von (Bassreflexbox) Reserveradachse, gedacht
- 9: Fahrtrichtung

- 10: Kofferraumboden
- 11: Reserveradwanne
- 12: Auflagefläche für Reserverad
- 13: Batteriemulde

- 15: Seitenblech, links
- 16: Seitenblech, rechts
- 17: Seitenmulde, links, Kofferraumfreiraum
- 18: Seitenmulde, rechts, Kofferraumfreiraum

- 21: Wandung, vertikal, vorn
- 22: Wandung, vertikal, hinten
- 23: Abschnitt, horizontal

- 30: Bassreflexbox
- 31: Oberschale
- 32: Deckelfläche
- 33: Einstülpung für Reifenreparatursatz
- 34: Einstülpung für Verschraubung
- 35: Mantelfläche

- 38: Innenraum von (30)
- 39: Trennfuge

- 41: Unterschale
- 42: Boden
- 43: Befestigungsflansch, Lautsprecheraufnahme
- 44: Lautsprecherkanal

- 45: Bassreflexrohr
- 46: Bassreflexrohreintrittsöffnung
- 47: Reflexrohrkanal

- 48: Rand
- 49: Batteriehaube, Gehäuseeinstülpung

- 51: Distanzstücke

- 60: Gehäuseerweiterung
- 62: Vertiefungen für Bordwerkzeuge
- 68: Innenraum von (60)

## Patentansprüche

1. Kraftfahrzeug mit einer Anlage zur Wiedergabe von Schall, wobei die Anlage zur Schallwiedergabe mindestens eine Bassresonanzbox umfasst, die mit einem Bassreflexrohr und/oder einer Bassreflexöffnung und mit wenigstens einem eingebauten Lautsprecher ausgestattet ist, **dadurch gekennzeichnet,**
- **dass** die Bassresonanzbox (30) in der Reserveradwanne (11) angeordnet ist und
- **dass** die Bassreflexbox (30) mindestens den für ein Reserverad vorgesehenen Platz in der Reserveradwanne (11) bezüglich seiner maximalen Ausdehnung entlang der Reserveradachse (8) und bezüglich der radialen Außenkontur - abzüglich eines radialen und axialen Spieles von 5 bis 20 Millimeter ausfüllt.

2. Kraftfahrzeug gemäß Anspruch 1, **dadurch gekennzeichnet, dass** die Bassreflexbox (30) zur Auflagefläche (12) des Reserverads hin eine Gehäuseeinstülpung (49) aufweist, die mindestens den Bauraum einer Starterbatterie (1) frei lässt.

3. Kraftfahrzeug gemäß Anspruch 2, **dadurch gekennzeichnet, dass** der Schwerpunkt der Gehäuseeinstülpung (49) in einem Bereich liegt, dessen Bereichsgrenze maximal 15% des Reserveraddurchmessers von der Reserveradachse (8) entfernt ist.

4. Kraftfahrzeug gemäß Anspruch 2, **dadurch gekennzeichnet, dass** zwischen der Gehäuseeinstülpung (49) und der nächstgelegenen Wandung der Bassreflexbox (30) ein Durchgang für den Abzug von Batteriegasen angeordnet ist.

5. Kraftfahrzeug gemäß Anspruch 1, **dadurch gekennzeichnet, dass** die Reserveradwanne (11) im Kofferraumboden (10) integriert ist.

6. Kraftfahrzeug gemäß Anspruch 1, **dadurch gekennzeichnet, dass** der Kofferraumboden (10) mit der Reserveradwanne (11) zwischen den Radhäusern der Hinterräder angeordnet ist.

7. Kraftfahrzeug gemäß Anspruch 1, **dadurch gekennzeichnet, dass** das Gehäuse der Bassreflexbox (30) aus zwei miteinander unlösbar verbundenen Schalen (31, 41) besteht.

8. Kraftfahrzeug gemäß Anspruch 1, **dadurch gekennzeichnet, dass** die Bassreflexbox (30) in mindestens einen an die Reserveradwanne (11) angrenzenden Karosseriefreiraum (17) und/oder (18) mit einer Gehäuseerweiterung (60) hineinragt.

9. Kraftfahrzeug gemäß Anspruch 1, **dadurch gekennzeichnet, dass** das Gehäuse der Bassreflexbox (30) mindestens eine Einstülpung (32) zur Aufnahme von zumindest einem Teil eines Reifenreparatursatzes (2) aufweist.

10. Kraftfahrzeug gemäß Anspruch 8, **dadurch gekennzeichnet, dass** in der Gehäuseerweiterung (60) Einstülpungen oder Vertiefungen (62) zur Aufnahme und Halterung von einzelnen Bordwerkzeugen oder anderen Teilen angeordnet sind.

## Claims

1. A vehicle with an equipment designed to reproduce sounds, said sound reproducing equipment being comprised of at least one bass reflex box which is fitted with one bass reflex tube and/or with one bass reflex opening and with at least one integrated loudspeaker, wherein
- said subwoofer (30) is placed in the spare wheel pan (11) and
- said subwoofer (30) - as regards its maximum extension along the spare wheel axis (8) and its radial periphery - fills up at least the space allotted for the spare wheel in the spare wheel pan (11) - minus a radial and axial allowance of 5 to 20 millimetres.

2. The vehicle of claim 1, wherein there is a recess (49) in the subwoofer (30) enclosure facing the area (12) supporting the spare wheel that leaves enough free space to mount a starter battery (1).

3. The vehicle of claim 2, wherein the centre of gravity of said subwoofer enclosure recess (49) is located in an area, the borders of which are no further than 15 percent of the spare wheel diameter from the spare wheel axis (8).

4. The vehicle of claim 2, wherein there is a gap between said subwoofer enclosure recess (49) and the closest subwoofer enclosure element (30) for the exhaust of battery gases.

5. The vehicle of claim 1, wherein said spare wheel pan (11) is part of the boot floor (10).

6. The vehicle of claim 1, wherein said boot floor (10) with said spare wheel pan (11) is placed between the rear inner wheel casing.

7. The vehicle of claim 1, wherein said subwoofer enclosure (30) is made of two inseparably assembled shells (31, 41).

8. The vehicle of claim 1, wherein said subwoofer (30) extends into at least one spare place (17) and/or (18) inside the car body structure adjacent to said spare wheel pan (11) and extends into it as an enclosure extension (60).

9. The vehicle of claim 1, wherein said subwoofer enclosure (30) shows at least one recess (32) to accommodate at least part of a tyre repair kit (2).

10. The vehicle of claim 8, wherein said enclosure extension (60) shows recesses or cavities (62) to accommodate and store different car tools or other parts.

## Revendications

1. Véhicule muni d'un équipement de reproduction acoustique, ledit équipement de restitution acoustique comprenant au moins un caisson de basses, qui est équipé d'un tube bass-reflex et/ou d'un orifice bass-reflex et d'au moins un haut-parleur intégré, **caractérisé en ce que**
- le caisson de basses (30) est placé dans le logement de la roue de secours (11) et que
- le caisson de basses (30) remplit au moins l'espace prévu pour une roue de secours dans le logement de la roue de secours (11) pour ce qui est de son extension maximale le long de l'axe de la roue de secours (8) et de son contour radial extérieur - moins un jeu radial et axial de 5 à 20 millimètres.

2. Véhicule selon la revendication 1, **caractérisé en ce que** le caisson de basses (30) présente un rentrant (49) par rapport à la surface d'appui (12) de la roue de secours qui dégage au moins un espace suffisant pour loger une batterie de démarrage (1).

3. Véhicule selon la revendication 2, **caractérisé en ce que** le centre de gravité du rentrant du caisson (49) se trouve dans une zone dont la limite est distante de l'axe de la roue de secours d'au maximum 15% du diamètre de la roue de secours (8).

4. Véhicule selon la revendication 2, **caractérisé en ce qu'**un passage est prévu pour l'échappement des gaz de la batterie entre le rentrant du caisson (49) et la paroi la plus proche du caisson de basses (30).

5. Véhicule selon la revendication 1, **caractérisé en ce que** le logement de la roue de secours (11) est intégré dans le plancher du coffre (10).

6. Véhicule selon la revendication 1, **caractérisé en ce que** le plancher du coffre (10) comportant le logement de la roue de secours (11) est situé entre les passages de roues arrière.

7. Véhicule selon la revendication 1, **caractérisé en ce que** le boîtier du caisson de basses (30) est constitué de deux coques liées indissociablement entre elles (31, 41).

8. Véhicule selon la revendication 1, **caractérisé en ce que** le caisson de basses (30) occupe au moins un vide de carrosserie (17) et/ou (18) limitrophe du logement de la roue de secours (11) et le remplit au moyen d'une extension de l'enceinte (60).

9. Véhicule selon la revendication 1, **caractérisé en ce que** le boîtier du caisson de basses (30) présente au moins un rentrant (32) pour loger au moins une partie d'un kit de réparation de roue (2).

10. Véhicule selon la revendication 8, **caractérisé en ce que** l'extension de l'enceinte (60) comporte des rentrants ou creux (62) pour loger et retenir divers outils de bord ou autres pièces.
